# EUROPEAN PATENT APPLICATION

(11) **EP 4 852 114 A1**
(43) Date of publication of application: **09.12.2026**
(21) Application number: 25748929.4
(22) Date of filing: 31.01.2025
(51) Int. Cl.: H01M 10/04, H01G 11/26, H01G 11/70, H01M 4/02, H01M 4/13, H01M 4/70, H01M 10/058, H01M 50/531

(54) **POWER STORAGE DEVICE**

(30) Priority: 31.01.2024 JP 2024013698
(71) Applicant: Panasonic Intellectual Property Management Co., Ltd., Kadoma-shi, Osaka 571-0057 (JP)
(72) Inventor: KATO, Yudai, Kadoma-shi, Osaka 571-0057 (JP)
(74) Representative: Eisenführ Speiser
(86) International application number: PCT/JP2025/003132
(87) International publication number: WO 2025/164750

(57) **Abstract**

A cylindrical battery comprises: an electrode body (14) in which a positive electrode (11) and a negative electrode (12) are disposed with a separator (13) therebetween; and an exterior body (16) that accommodates the electrode body (14). The negative electrode (12) has a first end and a second end in the axial direction. Current collection for the negative electrode (12) is performed from the first end side. A first mixture layer (42) of the negative electrode (12) may have a first mixture thin section (81) in which the thickness is thin at the end section on the second end side in the axial direction, and the position of formation of the first mixture thin section (81) may coincide with the position of formation of a thin section of the negative electrode (12).

## Description

### TECHNICAL FIELD

The present disclosure relates to a power storage device and, for example, to a battery and a capacitor.

### BACKGROUND ART

Conventionally, power storage devices include a cylindrical secondary battery described in Patent Literature 1. The cylindrical secondary battery comprises: an electrode assembly that includes a positive electrode and a negative electrode that are wound with a separator interposed therebetween; a closed-bottom-cylindrical-shaped housing can that accommodates the electrode assembly; and a sealing assembly that blocks an opening portion of the housing can. The positive electrode of the electrode assembly is electrically coupled to a bottom surface of the sealing assembly via a positive electrode lead. The negative electrode of the electrode assembly is electrically coupled to the bottom plate portion of the housing can via a negative electrode lead.

### CITATION LIST

### PATENT LITERATURE

PATENT LITERATURE 1: Japanese Unexamined Patent Application Publication No. 2000-048825

### SUMMARY

To further improve the capacity and output of the power storage device, and perform stable charging and discharging in a more severe environment, the reliability is required to be further improved. The present disclosure has an object to provide a highly reliable power storage device.

A power storage device according to the present disclosure comprises: an electrode assembly that includes a first electrode and a second electrode, and a separator interposed therebetween; and a housing body that accommodates the electrode assembly, wherein the first electrode includes a first end and a second end in a first direction, the first electrode is subjected to current collection from a side of the first end, and the first electrode includes a thin-wall portion that has a small thickness at an end portion on a side of the second end.

A power storage device according to the present disclosure comprises: an electrode assembly that includes a first electrode including a strip-shaped first core and a first mixture layer disposed on the first core, a second electrode including a strip-shaped second core and a second mixture layer disposed on the second core, and a separator interposed therebetween; and a housing body that accommodates the electrode assembly, wherein the first electrode includes a first end and a second end in a first direction, the first electrode is subjected to current collection from a side of the first end in the first direction, and the first core includes a core thin-wall portion that has a small thickness at an end portion on a side of the second end in the first direction.

The present disclosure may easily realize a highly safe and reliable power storage device.

### BRIEF DESCRIPTION OF DRAWING

FIG. 1 is a sectional view of a cylindrical battery in an axial direction according to one embodiment in the present disclosure.
FIG. 2 is a perspective view illustrating the structure of an electrode assembly.
FIG. 3(a) is a schematic plan view when a positive electrode is developed, and FIG. 3(b) is a schematic plan view when a negative electrode is developed in a strip shape.
FIG. 4 is an enlarged schematic sectional view of an area indicated by R in FIG. 1.
FIG. 5 is a schematic plan view of a negative electrode in a reference example corresponding to FIG. 3(b).
FIG. 6 is a schematic plan view of a cylindrical battery in a first modified example corresponding to FIG. 3(b).
FIG. 7 is an enlarged schematic sectional view of a cylindrical battery of a second modified example corresponding to FIG. 4.
FIG. 8 is an enlarged schematic sectional view of a cylindrical battery of a third modified example corresponding to FIG. 4.
FIG. 9 is an enlarged schematic sectional view of a cylindrical battery of a fourth modified example corresponding to FIG. 4.
FIG. 10 is an enlarged schematic sectional view of a cylindrical battery of a fifth modified example corresponding to FIG. 4.
FIG. 11 is a schematic plan view of a cylindrical battery of a sixth modified example corresponding to FIG. 3(b).

### DESCRIPTION OF EMBODIMENTS

Referring to the drawings, embodiments of a power storage device according to the present disclosure are described in detail below. The power storage device in the present disclosure may be a secondary battery that includes an aqueous electrolyte, or a secondary battery that includes a non-aqueous electrolyte. The power storage device in the present disclosure may be a cylindrical battery that comprises a cylindrical (for example, closed-bottom cylindrical) housing can, a rectangular battery that comprises a rectangular housing can, or a pouch-shaped battery that comprises a housing body made of a laminated sheet. In such batteries, the cylindrical housing can, the rectangular housing can, and the laminated sheet constitute the housing bodies. Alternatively, the power storage device in the present disclosure may be a capacitor that is repeatedly charged and discharged. In the following description, an example of a cylindrical secondary battery (lithium-ion battery) that includes a non-aqueous electrolyte is described as a power storage device as one embodiment. However, the power storage device in the present disclosure is not limited to this.

In cases where the following description includes a plurality of embodiments and modified examples, it is anticipated from the outset that a new embodiment is constructed by combining their characteristic portions as appropriate. In the following description, the same components are assigned the same symbols in the drawings, and redundant description is omitted. These drawings include schematic diagrams. The dimensional proportions, such as of longitudinal, lateral, and height, of the corresponding components between different drawings do not necessarily match. In the present description, a side of a sealing assembly 17 in the axial direction (height direction) of a cylindrical battery 10 is assumed as "upper" side, and a side of a bottom plate portion 68 of a housing can 16 in the axial direction is assumed as "lower" side. In the present description, in a case of reference with an axial direction, this axial direction indicates the axial direction of the cylindrical battery 10. The axial direction of the cylindrical battery 10 substantially matches the height direction of the electrode assembly 14. Among the configuration elements described below, configuration elements that are not described in an independent claim indicating the highest-level concept are optional configuration elements, and are not necessary configuration elements.

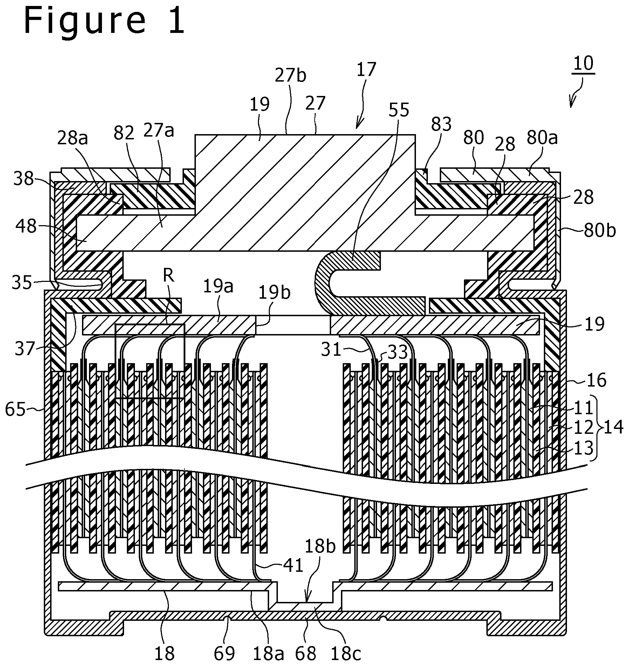

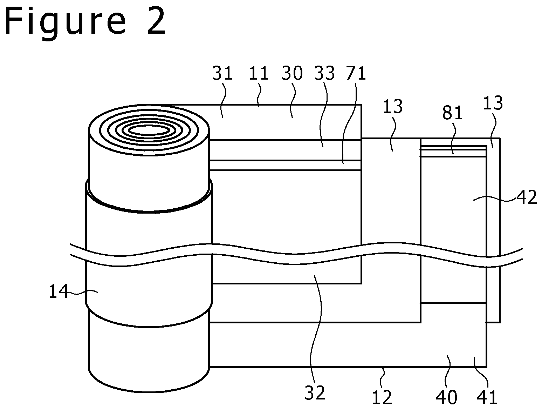

FIG. 1 is a sectional view of the cylindrical battery 10 in the axial direction according to one embodiment in the present disclosure. FIG. 2 is a perspective view illustrating the structure of an electrode assembly 14. As shown in FIG. 1, the cylindrical battery (hereinafter, simply called a battery) 10 comprises: the coiled electrode assembly 14; a non-aqueous electrolyte (not shown); the closed-bottom-cylindrical-shaped housing can 16 that is made of metal, and stores the electrode assembly 14 and the non-aqueous electrolyte; and the sealing assembly 17.

As shown in FIG. 2, the electrode assembly 14 has a coiled structure where a positive electrode 11 having a strip shape as an example of a sheet shape, a negative electrode 12 having a strip shape as an example of a sheet shape are wound with two strip-shaped separators 13 each interposed therebetween. In the present embodiment, the negative electrode 12 constitutes a first electrode, and the positive electrode constitutes the second electrode. As shown in FIG. 2, the positive electrode 11 protrudes upward more than the negative electrode 12 and the separators 13, and the negative electrode 12 protrudes downward more than the positive electrode 11 and the separators 13. The positive electrode 11 includes a third exposed portion 31 where a second mixture layer 32 is not provided (formed) in a second core 30, at an upper end portion (an end portion on a fourth end side of the positive electrode) in the axial direction (first direction) from a winding inner end to a winding outer end in the winding direction of the strip-shaped positive electrode 11. In the present embodiment, the second core 30 constitutes a positive electrode core, and the second mixture layer 32 constitutes a positive electrode mixture layer. The upper end portion of the negative electrode 12 is an end portion of the negative electrode 12 on the second end side in the axial direction. The negative electrode 12 includes a first exposed portion 41 where a first mixture layer 42 is not provided in a first core 40, at a lower end portion (an end portion on a first end side of the negative electrode) in the axial direction from the winding inner end to the winding outer end in the winding direction of the strip-shaped negative electrode 12. In the present embodiment, the first core 40 constitutes a negative electrode core, and the first mixture layer 42 constitutes a negative electrode mixture layer. In the electrode assembly in the present disclosure, the positive electrode and the negative electrode are not necessarily wound along with the separator. An electrode assembly that includes sheet-type positive electrodes and negative electrodes that are alternately stacked with each separator interposed therebetween may be employed.

The upper end portion of the electrode assembly 14 in the axial direction is made up of the end portion on the fourth end side of the positive electrode 11, and of the third exposed portion 31. The lower end portion of the electrode assembly 14 in the axial direction is made up of the end portion on the first end side of a negative electrode 23, and of the first exposed portion 41. To prevent lithium from being deposited, the first mixture layer 42 is formed in a dimension one size larger than the second mixture layer 32. That is, the first mixture layer 42 is formed longer in the negative electrode longitudinal direction (first longitudinal direction) and the negative electrode width direction than the second mixture layer 32.

The non-aqueous electrolyte has ionic conductivity (e.g., lithium ion conductivity). The non-aqueous electrolyte may be a liquid electrolyte (electrolytic solution) or a solid electrolyte. The liquid electrolyte (electrolytic solution) contains a non-aqueous solvent and an electrolyte salt dissolved in the non-aqueous solvent. For example, any of esters, ethers, nitriles, amides, and a mixed solvent that contains two or more of them is used as the non-aqueous solvent. Examples of the non-aqueous solvent include ethylene carbonate (EC), ethyl methyl carbonate (EMC), dimethyl carbonate (DMC), and diethyl carbonate (DEC), and a mixed solvent thereof. The non-aqueous solvent may contain a halogen-substituted product (e.g., fluoroethylene carbonate) that is any of these solvents with at least some of their hydrogens being substituted with halogen atoms such as fluorine. For example, a lithium salt such as LiPF₆ is used as the electrolyte salt.

For example, a solid or gelatinous polymer electrolyte, or inorganic solid electrolyte is used as the solid electrolyte. The polymer electrolyte contains, for example, a lithium salt and a matrix polymer, or a non-aqueous solvent, a lithium salt, and a matrix polymer. For example, a polymer material that absorbs the non-aqueous solvent and causes it to gel is used as the matrix polymer. For example, a fluorine resin, an acrylic resin, or a polyether resin is used as the polymer material. For example, a material (e.g., an oxide-based solid electrolyte, a sulfide-based solid electrolyte, or a halogen-based solid electrolyte) publicly known in an all-solid-state lithium ion secondary battery and the like is used as the inorganic solid electrolyte.

The positive electrode 11 includes the second core 30, and the second mixture layers 32 formed on the opposite surfaces of the second core 30. The second core 30 may be made of metal foil that is stable in the potential range of the positive electrode 11, such as aluminum or an aluminum alloy, a film on which the metal is disposed as a surface layer, or the like. The second mixture layer 32 contains a positive-electrode active material, a conductive agent, and a binding agent. The positive electrode 11 can be fabricated by forming the second mixture layers 32 on the opposite surfaces of the second core 30 through, for example, applying a positive electrode mixture slurry that contains the positive-electrode active material, the conductive agent, the binding agent, and the like on the second core 30, drying the applied films, and then compressing them. Note that the second mixture layer 32 may be formed only on one surface of the second core. The second mixture layers 32 may be made by pasting sheets each formed in a layer to the second core. A conductive adhesive that contains conductive particles may be interposed between the second core 30 and the second mixture layers 32.

The positive-electrode active material has a configuration that contains a lithium-containing metal composite oxide as a principal component. The metal element contained in the lithium-containing metal composite oxide is Ni, Co, Mn, Al, B, Mg, Ti, V, Cr, Fe, Cu, Zn, Ga, Sr, Zr, Nb, In, Sn, Ta, W, or the like. An example of preferable lithium-containing metal composite oxides is a composite oxide that contains at least one of the group consisting of Ni, Co, Mn, and Al.

Examples of the conductive agent contained in the second mixture layers 32 can include carbon materials, such as carbon black, acetylene black, Ketjenblack, and graphite. Example of the binding agent contained in the second mixture layers 32 can include fluorine resins such as polytetrafluoroethylene (PTFE) and polyvinylidene fluoride (PVdF), and a polyacrylonitrile (PAN), a polyimide resin, an acrylic resin, and a polyolefin resin. These resins may be used along with a cellulose derivative such as carboxymethylcellulose (CMC) or a salt thereof, polyethylene oxide (PEO), or the like.

The negative electrode 12 includes the first core 40, and the first mixture layers 42 formed on the opposite surfaces of the first core 40. The first core 40 may be made of metal foil that is stable in the potential range of the negative electrode 12, such as copper or a copper alloy, a film on which the metal is disposed as a surface layer, or the like. The first mixture layers 42 contains a negative-electrode active material, and a binding agent. The negative electrode 12 can be fabricated by forming the first mixture layers 42 on the opposite surfaces of the first core 40 through, for example, applying a negative electrode mixture slurry that contains the negative-electrode active material, the binding agent, and the like on the first core 40, drying the applied films, and then compressing them. Note that the first mixture layer 42 may be formed only on one surface of the first core 40. Alternatively, first mixture layers 42 having already been formed in a layered manner may be pasted to the first core 40. A conductive adhesive that contains conductive particles may be interposed between the first core 40 and the first mixture layers 42.

Typically, a carbon material that can absorb and desorb lithium ions is used as the negative-electrode active material. Preferable carbon materials include graphites that are natural graphites, such as flake graphite, lump graphite, and earthy graphite, and artificial graphites, such as artificial lump graphite, and graphitized mesophase carbon microbeads. The first mixture layer 42 may contain, as the negative-electrode active material, an Si material that contains silicon (Si). Metal that is other than Si and is alloyed with lithium, an alloy that contains the metal, a compound that contains the metal, or the like may be used as the negative-electrode active material.

Similar to the case of the second mixture layer 32, a fluorine resin, PAN, a polyimide resin, an acrylic resin, a polyolefin resin, or the like may be used as the binding agent contained in the first mixture layers 42. Preferably, styrene-butadiene rubber (SBR) or its derivative is used. The first mixture layers 42 may contain, for example, CMC or its salt, polyacrylic acid (PAA) or its salt, or polyvinyl alcohol, in addition to SBR or the like.

A porous sheet that has ion permeability and insulating property is used as the separator 13. Specific examples of the porous sheet include a microporous thin-film, a woven fabric, and a non-woven. Preferably, the material of the separators 13 is a polyolefin resin such as polyethylene or polypropylene, cellulose, or the like. The separator 13 may have either a single-layer structure or a laminate structure. A heat-resistant layer or the like may be formed on each of the surfaces of the separators 13.

As shown in FIG. 1, the battery 10 includes a metal lower current collector plate (negative electrode current collector plate) 18 that is made of copper, iron, nickel, a nickel alloy, or the like lower than the electrode assembly 14 in the axial direction. The lower current collector plate 18 constitutes a first energization member. In the present embodiment, a lower current collector plate 18 includes a disk-shaped base portion 18a, and a closed-bottom-cylindrical-shaped protruding portion 18b that is provided at the center of the base portion 18a and protrudes downward in the axial direction. In a state where the upper surface of the base portion 18a is pressed against the first exposed portion 41 that constitutes a lower end portion of the electrode assembly 14 in the axial direction, the lower surface of the base portion 18a is irradiated with laser light from below. By the laser welding, the first exposed portion 41 is joined to the upper surface of the base portion 18a. Furthermore, a bottom plate portion 18c disposed at the distal end of the protruding portion 18b is overlaid on the upper surface of the bottom plate portion 68 of the housing can 16, and subsequently, the bottom plate portion 68 is irradiated with the laser light from below. By the laser welding, the lower current collector plate 18 is joined to the bottom plate portion 68, thus being electrically coupled to the housing can 16.

The case where the first exposed portion 41 is electrically coupled to the housing can 16 via the lower current collector plate 18 has been described. However, the negative electrode may be electrically coupled to the housing can via one or more negative electrode leads that protrude from the lower end portion of the electrode assembly. Alternatively, in addition to or instead of the electrical coupling to the housing can via one or more negative electrode leads, the contact of the core exposed portion of the negative electrode provided on the outermost periphery of the electrode assembly to the inner-peripheral surface of the housing can may electrically couple the negative electrode to the housing can. The first exposed portion 41 may be directly joined to the bottom plate portion 68 of the housing can 15 by laser or the like. The first exposed portion 41 may be joined to the lower current collector plate 18 in a state of being bent in the radial direction. Furthermore, in a state where parts of the first exposed portion 41 arranged in the radial direction are overlaid on each other, the first exposed portion 41 may be joined to the lower current collector plate 18.

The battery 10 includes an upper current collector plate 19 (positive electrode current collector plate) that is made of metal, such as aluminum or an aluminum alloy, on the upper side of the electrode assembly 14 in the axial direction. The upper current collector plate 19 constitutes a second energization member. The upper current collector plate 19 includes a base portion 19a electrically coupled to the positive electrode 11, and a through-hole 19b provided at the center of the base portion 19a. A spacer 37 that is made of an insulating member for preventing the upper current collector plate 19 and the housing can 16 from being coupled to each other is provided between the base portion 19a and the housing can 16. In a state where the lower surface of the base portion 19a is pressed against the third exposed portion 31 that constitutes the upper end portion of the electrode assembly 14, the upper surface of the base portion 19a is irradiated with laser light from above. By the laser welding, the third exposed portion 31 is joined to the lower surface of the base portion 19a.

Note that the distal end side of the third exposed portion 31 may be joined to the upper current collector plate 19 in a state of being bent in the radial direction. Furthermore, in a state where parts of the third exposed portion 31 arranged in the radial direction are overlaid on each other, the third exposed portion 31 may be joined to the upper current collector plate 19. Alternatively, a positive electrode lead (not shown) joined to the positive electrode 11 may penetrate through a through-hole 19b, and be subsequently joined to the upper surface of the base portion 19a.

The sealing assembly 17 is made up of a gasket 28 and a terminal cap 27. The terminal cap 27 is made of metal. The terminal cap 27 includes a disk-shaped base portion 27a, and a projection 27b. The projection 27b is made up of, for example, a cylindrical protrusion. The base portion 27a of the terminal cap 27 may be coupled to the upper surface of the base portion 19a of the upper current collector plate 19 through a strip-shaped lead 55. The lead 55 is made of a material that has conductivity, for example, metal. The method of joining the lead 55, the base portion 27a, and the base portion 19a may be welding or the like. For example, the terminal cap 27 and the upper current collector plate 19 are electrically coupled to each other via the lead 55 by laser welding.

Typically, the housing can 16 is made of metal that contains iron as a principal component, and is made of, for example, a material of nickel-plated iron. The housing can 16 may be made of metal that contains aluminum or the like as a principal component. The housing can 16 contains a cylindrical portion 65 and a bottom plate portion 68. The cylindrical portion 65 includes a ring-shaped groove portion 35, and a ring-shaped shoulder portion 38. The groove portion 35 is formed by applying a spinning process to part of the cylindrical portion 65, and forming a recess inward in the radial direction along the entire periphery in the circumferential direction. The shoulder portion 38 is formed when the upper end portion of the cylindrical portion 65 is bent inward in the radial direction and is crimped to the peripheral portion 48 of the sealing assembly 17, and extends inward in the radial direction at the upper end portion of the cylindrical portion 65.

The peripheral portion 48 of the terminal cap 27 is clamped between the shoulder portion 38 and the groove portion 35 via the gasket 28, thereby allowing the sealing assembly 17 to be fixed to the housing can 16. The gasket 28 has a role of a sealing material for maintaining the airtightness in the battery, and a role as an insulating material that insulates the housing can 16 and the sealing assembly 17 from each other. The gasket 28 is made of, for example, polyolefin. The groove portion 35 is formed at a position apart from the upper end of the housing can 16 by a predetermined length. The predetermined length corresponds to, for example, a length that is greater than or equal to 1% and less than or equal to 20% of the length of the housing can 16 in the axial direction. The gasket 28 is compressed by the shoulder portion 38. The gasket 28 includes a protruding portion 28a that protrudes inward in the radial direction from between the shoulder portion 38 and the sealing assembly 17.

A thin-wall fragile portion 69 is formed in the bottom plate portion 68. The fragile portion 69 is provided by, for example, forming a circular or C-shaped engraved mark on the lower surface of the bottom plate portion 68. When the battery 10 abnormally generates heat and the internal pressure of the battery 10 increases to a predetermined pressure, the fragile portion 69 fractures, and gas is discharged from the bottom plate portion 68. The discharge of the gas prevents the internal pressure of the battery 10 from excessively increasing to explode the battery 10, and the safety of the battery 10 increases.

The battery 10 further comprises a ring-shaped metal plate 80, and a ring-shaped insulating plate 82 made of an insulating material. The metal plate 80 includes a circular-ring-shaped portion 80a that extends in a substantially radial direction, and a cylindrical portion 80b that extends downward from the radial-direction outer end of the circular-ring-shaped portion 80a. A distal end portion of the cylindrical portion 80b may be fixed to the groove portion 35. The circular-ring-shaped portion 80a is joined to the upper surface of the shoulder portion 38.

The terminal cap 27 to which the third exposed portion 31 is electrically coupled via the upper current collector plate 19 and the lead 55 serves as a positive electrode terminal. The metal plate 80 to which the first exposed portion 41 is electrically coupled via the lower current collector plate 18 and the housing can 16 serves as a negative electrode terminal. The metal plate 80 is electrically coupled to, for example, a current collector plate (not shown) that electrically couples a plurality of batteries 10 in series or parallel using a tongue portion (lead) of the current collector plate. By such a configuration, the plurality of batteries 10 can be easily electrically coupled to the current collector plate.

The insulating plate 82 is interposed between the metal plate 80 and the sealing assembly 17, and insulates the metal plate 80 from the sealing assembly 17. An outer peripheral edge portion of the insulating plate 82 on the outer side in the radial direction may be positioned on the upper side of the protruding portion 28a of the gasket 28, and be in contact with the gasket 28. By such a configuration, the gasket 28 and the insulating plate 82 reliably insulate the metal plate 80 from the sealing assembly 17. A cylindrical portion 83 that covers the outer-peripheral surface of the projection 27b of the terminal cap 27 is provided with the periphery of a hollow portion of the insulating plate 82. The cylindrical portion 83 is joined to an end portion of a plate-shaped base portion of the insulating plate 82 on the inner side in the radial direction. Note that the cylindrical battery 10 does not necessarily include the metal plate 80 and the insulating plate 82.

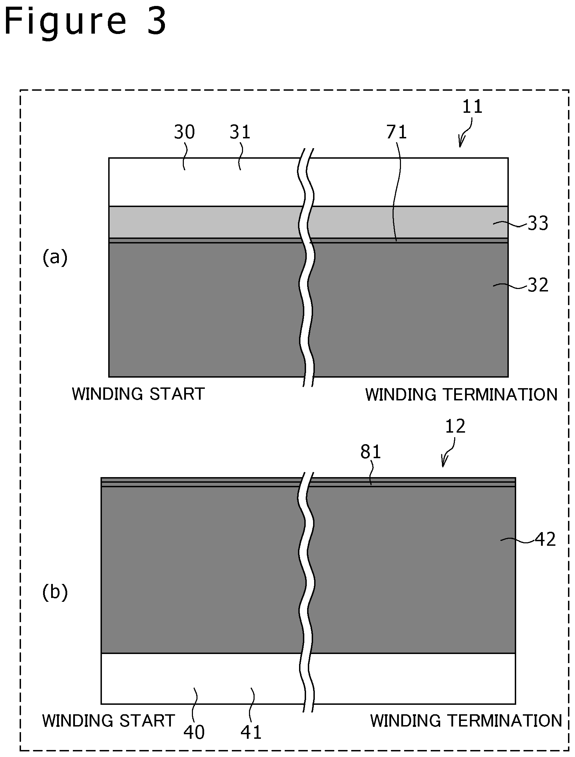

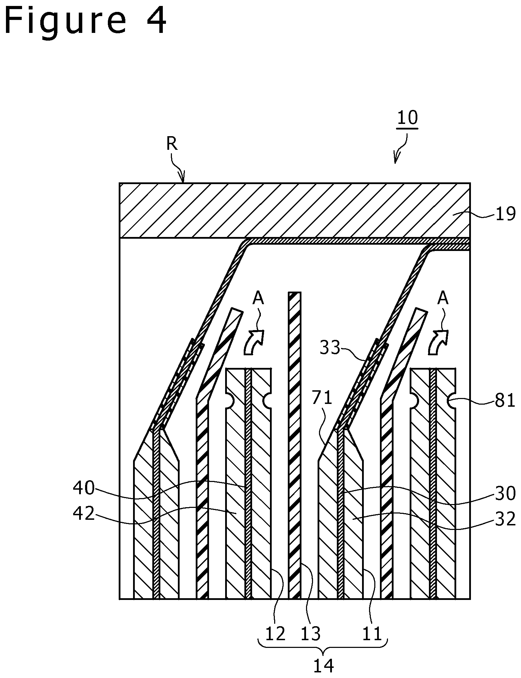

FIG. 3(a) is a schematic plan view when the positive electrode 11 is developed, and FIG. 3(b) is a schematic plan view when the negative electrode 12 is developed in a strip shape. FIG. 4 is an enlarged schematic sectional view of an area indicated by R in FIG. 1. As shown in FIG. 3(a), the positive electrode 11 includes resin layers (insulating layer) 33 where an insulative resin, such as polyvinylidene fluoride (PVdF), is disposed on the second core 30 on both the winding outer surface and the winding inner surface. The resin layers 33 are provided for preventing the positive electrode 11 and the negative electrode 12 from being short-circuited. The resin layers 33 are provided on the opposite surfaces of the positive electrode 11 from the winding inner end to the winding outer end in the winding direction. The resin layer 33 is disposed between the third exposed portion 31 and the second mixture layer 32 with respect to the positive electrode width direction. Note that the resin layer may contain an electrically insulating metal oxide, such as alumina.

As shown in FIG. 4, on each of the winding inner surface and the winding outer surface of the positive electrode 11, the second mixture layer 32 includes a second mixture thin-wall portion 71 that has a small thickness at the end portion on the fourth end side (the end portion on the second end side). The formation positions of the second mixture thin-wall portion 71 on the winding inner surface and the winding outer surface of the positive electrode 11 are substantially identical. The second mixture thin-wall portion 71 is a portion that extends from a substantially constant thickness portion of the second mixture layer 32 to the fourth end side in the positive electrode width direction, and has a smaller thickness than the substantially constant thickness portion. The second mixture thin-wall portion 71 has a thickness that gradually decreases toward the distal end on the fourth end side. The second mixture thin-wall portion may be continuous to the substantially constant thickness portion via a step portion, and be positioned closer to the second end than the substantially constant thickness portion. The second mixture thin-wall portion may have a substantially constant thickness that is smaller than that of the substantially constant thickness portion. Note that the power storage device of the present disclosure may include no second mixture thin-wall portion.

As shown in FIG. 3(a), on each of the winding inner surface and the winding outer surface of the positive electrode 11, the second mixture thin-wall portion 71 is provided at the same position at the end portion of the fourth end side in the positive electrode width direction from the winding inner end to the winding outer end in the positive electrode longitudinal direction that is an example of a second longitudinal direction. The second mixture thin-wall portion 71 can be provided on each of the winding inner surface and the winding outer surface of the positive electrode 11, by reducing the amount of positive electrode slurry to be applied to a predetermined location at the end portion on the fourth end side in the positive electrode width direction so as to correspond to the thickness of the second mixture thin-wall portion 71. Alternatively, the second mixture thin-wall portion 71 can be provided by increasing the pressure applied to the predetermined location at the end portion on the fourth end side in the positive electrode width direction during rolling of each of the winding inner surface and the winding outer surface of the positive electrode 11. Such rolling can be achieved by providing a rolling roll with a ring-shaped protrusion at a location corresponding to rolling of the predetermined location at the end portion on the fourth end side in the positive electrode width direction.

As shown in FIG. 4, on each of the winding inner surface and the winding outer surface of the negative electrode 12, the first mixture layer 42 includes a first mixture thin-wall portion 81 that has a small thickness at the end portion (upper end portion) on the second end side in the first direction (identical to the negative electrode width direction). The formation positions of the first mixture thin-wall portion 81 on the winding inner surface and the winding outer surface of the negative electrode 12 in the negative electrode width direction are substantially identical. A location on the negative electrode 12 provided with the first mixture thin-wall portion 81 is identical to the thin-wall portion of the negative electrode 12 that has a small thickness. As shown in FIG. 3(b), on each of the winding inner surface and the winding outer surface of the negative electrode 12, the first mixture thin-wall portion 81 is provided at the same position on the end portion on the second end side in the negative electrode width direction from the winding inner end to the winding outer end in the first longitudinal direction (negative electrode longitudinal direction).

On each of the winding inner surface and the winding outer surface of the negative electrode 12, the first mixture thin-wall portion 81 can be provided at a predetermined location on the end portion on the second end side in the negative electrode width direction, by reducing the amount of negative electrode slurry to be applied to a predetermined location at the end portion on the second end side in the negative electrode width direction. Alternatively, it can be provided by increasing the pressure applied to the predetermined location on the end portion on the second end side in the negative electrode width direction during rolling of each of the winding inner surface and the winding outer surface of the negative electrode 12. Such rolling can be achieved by providing the rolling roll with a ring-shaped protrusion at a location corresponding to rolling at the predetermined location on the end portion on the side end side in the negative electrode width direction.

The first mixture thin-wall portion 81 is positioned higher in the axial direction than the second mixture thin-wall portion 71 (the end portion of the second mixture layer in the axial direction). That is, the first mixture thin-wall portion 81 is formed at a non-overlapping portion of the first mixture layer 42 that does not overlap the second mixture layer 32, and is formed at a non-facing portion that extends outward away from the second mixture layer 32 in the first direction. The non-overlapping portion is disposed outward away from the second mixture layer in the axial direction. Note that the first mixture thin-wall portion is not prevented from being formed at an overlapping portion of the first mixture layer that overlaps the second mixture layer. Thus, battery capacity reduction can be prevented. The first mixture thin-wall portion 81 may be provided in an area that faces the second mixture layer 32. The first mixture thin-wall portion 81 may be formed to extend in a direction (e.g., the longitudinal direction of the negative electrode 12) intersecting the axial direction and a direction in which the positive electrode and the negative electrode face.

Next, working effects are described that can be achieved by providing the first mixture thin-wall portion (identical to the thin-wall portion of the negative electrode 12) 81 at at least part of the upper end portion of the negative electrode 12. When the battery 10 is charged and discharged many times, the positive electrode 11 and the negative electrode 12 are sometimes elongated in the axial direction (electrode assembly height direction). The expansion and contraction during charging and discharging occur at the negative electrode 12. The negative electrode 12 expands in the radial direction and the axial direction during charging. It is assumed that the elongation of the negative electrode 12 in the axial direction is caused by the expansion of the negative electrode during charging.

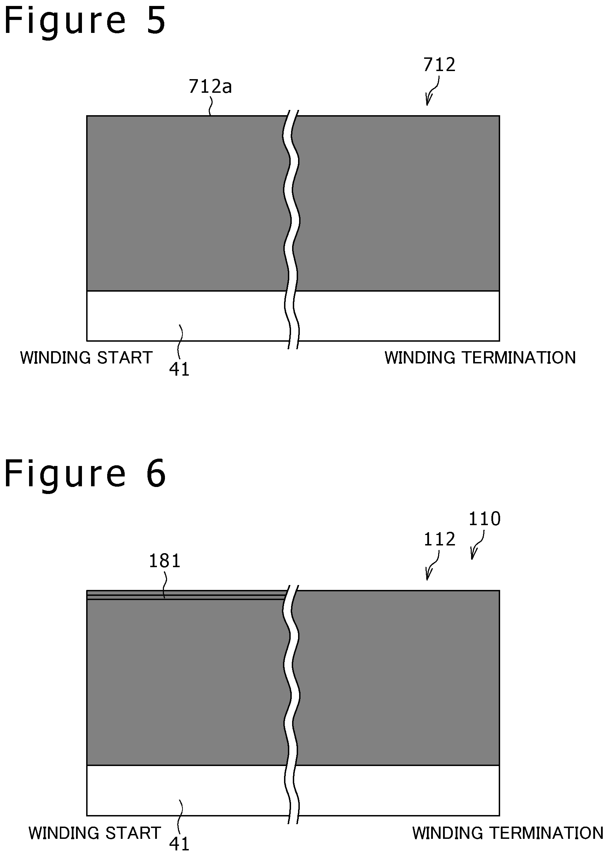

Under such a background, as shown in FIG. 5, i.e., a schematic plan view of a negative electrode 712 in a reference example corresponding to FIG. 3(b), with a negative electrode 712 having a simple rectangular shape, there is a possibility that as the negative electrode 712 expands in the negative electrode width direction, the separators 13 that insulate the positive electrode 11 and the negative electrode 712 from each other are damaged by the upper end portion (edge) 712a of the negative electrode 712. Due to the damage of the separators 13, the negative electrode 712 possibly comes into contact with the third exposed portion 31. On the other hand, in a case where the exposed portion of the positive electrode 11 is bent and the resin layer formed at the bent exposed portion faces the negative electrode in the axial direction, there is a possibility that the negative electrode 12 that is an extension of the resin layer is damaged.

In contrast, in the battery 10 in the present disclosure, the negative electrode 12 includes the first mixture thin-wall portion 81 that extends on the upper end portion from the winding inner end to the winding outer end in the negative electrode longitudinal direction, thereby reducing the stiffness of the upper end portion (edge) of the negative electrode 12. Consequently, even when the negative electrode 12 extends in the axial direction, and the edge of the negative electrode 12 presses the separator 13, the edge of the negative electrode 12 is prone to bending in the direction indicated by an arrow A in FIG. 4 due to the reaction force applied from the separator 13 or the resin layer, thus preventing the separator 13 or the resin layer from being damaged. Consequently, the positive electrode 11 and the negative electrode 12 are prevented from coming into contact with each other, and the reliability of the battery 10 can be increased.

Furthermore, the second mixture layer 32 of the positive electrode 11 includes the second mixture thin-wall portion 71 that has a small thickness at at least part in the positive electrode width direction at the end portion (upper end portion) on the second end side in the axial direction. Accordingly, the amount of lithium ions released from the second mixture layer 32 during charging decreases. Consequently, even if the first mixture thin-wall portion 81 is provided at at least part in the negative electrode width direction at the upper end portion of the negative electrode 12, and the amount of lithium ions allowed to be received by the upper end portion of the negative electrode 12 during charging decreases, deposition of lithium on the surface of the negative electrode 12 can be prevented. Therefore, degradation of the battery 10 during charging can be prevented.

Note that the present disclosure is not limited to the embodiment described above and their modified examples. Various changes and modifications can be made in the range of description in the claims of the present application and its equivalent range.

For example, the aforementioned embodiment describes the case where the first mixture layer 42 of the negative electrode 12 includes the first mixture thin-wall portion 81 on the end portion (upper end portion) on the second end side in the axial direction from the winding inner end to the winding outer end in the negative electrode longitudinal direction. However, the first mixture thin-wall portion is not necessarily provided over the entire region from the winding inner end to the winding outer end with respect to the negative electrode longitudinal direction, and may be provided locally with respect to the negative electrode longitudinal direction.

For example, with certain specifications, the elongations of the positive electrode and the negative electrode in the axial direction are significant on the winding inner side in the winding direction of the electrode assembly in some cases. In these cases, as shown in FIG. 6, i.e., the schematic plan view of a cylindrical battery 110 in a first modified example corresponding to the FIG. 3(b), a first mixture thin-wall portion 181 may be provided only on the winding inner side in the winding direction on the upper end portion of a negative electrode 112. Thus, the separator 13 can be effectively prevented from being damaged by forming the first mixture thin-wall portion in a small area.

The case where the third exposed portion 31 provided in the upper end portion (end portion on the fourth end side) of the positive electrode 11 is joined to the sealing assembly 17 has been described. However, the positive electrode may be joined to the sealing assembly using one or more positive electrode leads. One or more the first mixture thin-wall portions may be locally provided around an area that is at the upper end portion (end portion on the second end side) of the negative electrode and faces one or more positive electrode leads in the radial direction via the separator. In this case, at least some of the first mixture thin-wall portions are provided at positions of overlapping the positive electrode lead in the radial direction via the separator, which can effectively prevent the negative electrode and the positive electrode lead from coming into contact with each other.

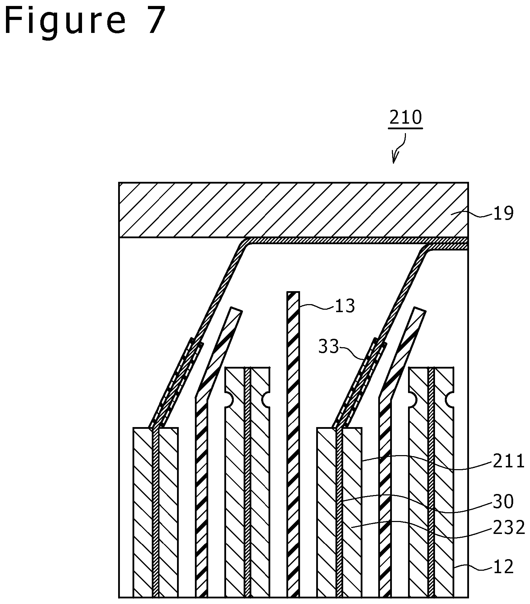

The case has been described where the second mixture layer 32 of the positive electrode 11 includes the second mixture thin-wall portion 71 that has a small thickness at at least part in the positive electrode width direction at the end portion (upper end portion) on the second end side in the axial direction. However, FIG. 7, i.e., the enlarged schematic sectional view of a cylindrical battery 210 in a second modified example corresponding to FIG. 4, a second mixture layer 232 of a positive electrode 211 does not necessarily include the second mixture thin-wall portion.

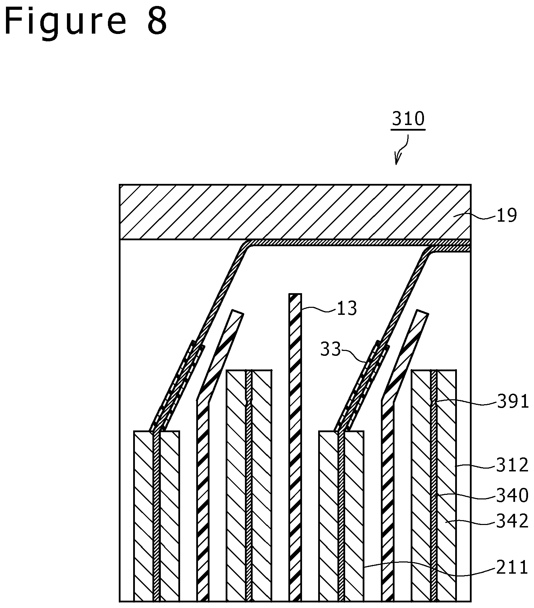

The case has been described where the first mixture layer 42 of the negative electrode 12 includes the first mixture thin-wall portion 81 that has a small thickness at at least part in the negative electrode width direction at the end portion (upper end portion) on the second end side in the axial direction. However, as shown in FIG. 8, i.e., an enlarged schematic sectional view of a cylindrical battery 310 in a third modified example corresponding to FIG. 4, a first mixture layer 342 of a negative electrode 312 does not necessarily include the first mixture thin-wall portion at the end portion (upper end portion) on the second end side in the axial direction, and a first core 340 of the negative electrode 312 may include a first core thin-wall portion 391 that has a small thickness at at least part in the negative electrode width direction at the end portion (upper end portion) on the second end side in the axial direction. The first core thin-wall portion 391 may extend in a direction that intersects the first direction. The first core 340 may include a non-facing portion that extends outward away from the second mixture layer in the first direction. The first core thin-wall portion 391 may be formed at the non-facing portion.

In this case, the thickness of the negative electrode 312 at the formation position on the first core thin-wall portion 391 in the negative electrode width direction may be substantially identical to the thickness of the negative electrode 312 at another position in the negative electrode width direction. The stiffness per unit volume of the first core 340 is higher than the stiffness per unit volume of the first mixture layer 342. Accordingly, this can also reduce the stiffness of the first core thin-wall portion 391 at the formation position in the negative electrode width direction.

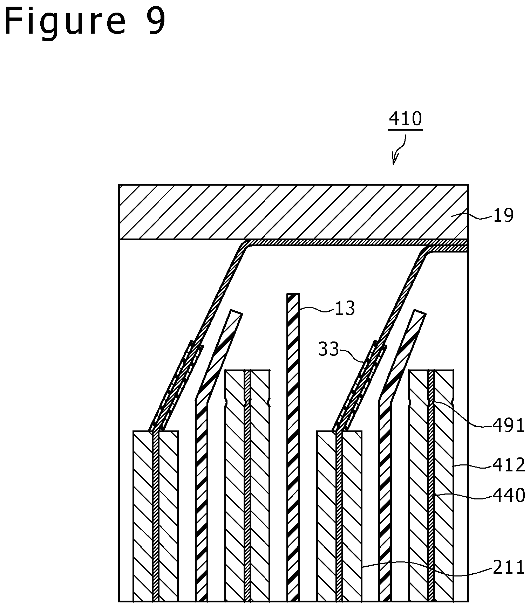

Alternatively, as shown in FIG. 9, i.e., an enlarged schematic sectional view of a cylindrical battery 410 in a fourth modified example corresponding to FIG. 4, the thickness of a negative electrode 412 at the formation position of a first core thin-wall portion 491 in the negative electrode width direction may be smaller by a dimension by which a first core 440 is thinned at the formation position.

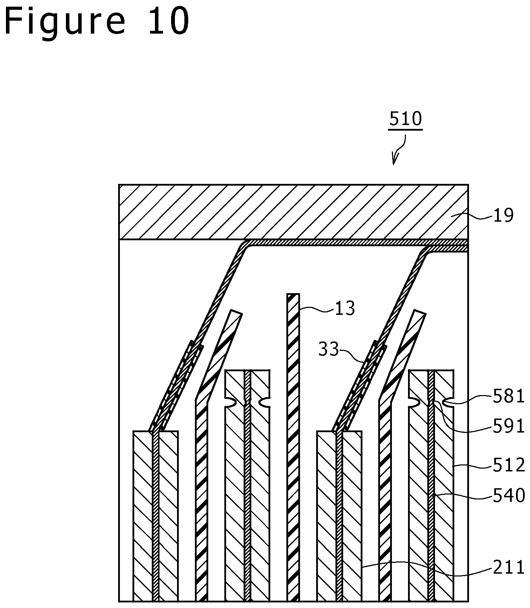

Furthermore, as shown in FIG. 10, i.e., an enlarged schematic sectional view of a cylindrical battery 510 in a fifth modified example corresponding to FIG. 4, a first mixture layer 542 of a negative electrode 512 may include a first mixture thin-wall portion 581 that has a small thickness at at least part in the negative electrode width direction at the end portion (upper end portion) on the second end side in the axial direction. A first core 540 of the negative electrode 512 may include a first core thin-wall portion 591 that has a small thickness at at least part in the negative electrode width direction at the end portion (the upper end portion; a non-overlapping portion without overlapping the second mixture layer in a direction intersecting a direction in which the positive electrode and the negative electrode face) on the second end side in the axial direction. Note that the first core thin-wall portion 591 may be formed at an overlapping portion of the first core 540 that overlaps the second mixture layer in a direction intersecting the direction in which the positive electrode and the negative electrode face.

In this case, as shown in FIG. 10, the formation position of the first mixture thin-wall portion 581 in the negative electrode width direction may be substantially identical to the formation position of the first core thin-wall portion 591 in the negative electrode width direction, and the formation position of the first mixture thin-wall portion in the negative electrode width direction may be different from the formation position of the first core thin-wall portion in the negative electrode width direction. In the case where the formation position of the first mixture thin-wall portion 581 in the negative electrode width direction is substantially identical to the formation position of the first core thin-wall portion 591 in the negative electrode width direction, the stiffness of the negative electrode 512 locally, significantly low, which can effectively prevent damage to the separator 13 or damage to the resin layer due to elongation of the negative electrode 512.

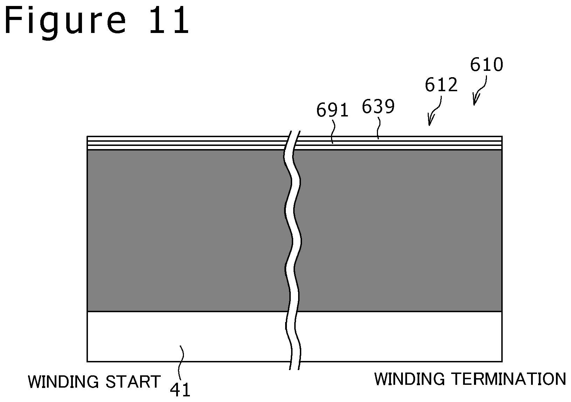

The case has been described where the entire upper end portion of the negative electrode 12 is included in the first mixture layer 42, and the upper end portion of the negative electrode 12 includes the first mixture thin-wall portion 81. However, as shown in FIG. 11, i.e., a schematic plan view of a cylindrical battery 610 in a sixth modified example corresponding to FIG. 3(b), a negative electrode 612 may include a second exposed portion 639 that extends in the first longitudinal direction at the upper end portion. The first core thin-wall portion 691 may be provided for the second exposed portion 639. According to such a configuration, the stiffness of the upper end portion (edge) of the negative electrode 612 can be further reduced. Consequently, the separators 13 can be further prevented from being damaged by the edge of the negative electrode 612.

The case where the first electrode is the negative electrode, and the second electrode is the positive electrode has been described. Alternatively, the first electrode may be the positive electrode, and the second electrode may be the negative electrode. The positive electrode is sometimes elongated in the electrode assembly height direction (axial direction) by the following phenomenon. In detail, the expansion and contraction during charging and discharging occur at the negative electrode, and the negative electrode expands in the radial direction and the axial direction during charging. During charging, due to the expansion of the negative electrode in the radial direction, the face pressure in the radial direction in the electrode assembly increases. Consequently, the positive electrode is pulled in the electrode assembly height direction by the expansion of the axial of the negative electrode, and the positive electrode tends to be elongated in the axial direction.

On the other hand, during discharging, the face pressure in the radial direction in the electrode assembly decreases due to the contraction of the negative electrode in the radial direction. Accordingly, the positive electrode is not pulled back by the contraction of the negative electrode in the electrode assembly height direction. As a result, when charging and discharging are repeated many times, the positive electrode is sometimes elongated in the electrode assembly height direction. With respect to this phenomenon, in this case, at least one of the positive electrode mixture thin-wall portion (first mixture thin-wall portion) and the positive electrode core thin-wall portion (first core thin-wall portion) may be provided at at least part of the axial-direction lower end portion of the positive electrode that constitutes the first electrode (corresponding to the end portion at the second end). In this case, the contact between the lower end portion of the positive electrode and the lower end portion of the negative electrode due to the elongation of the positive electrode in the axial direction can be prevented.

The structure of the sealing assembly is not limited to the structure in the embodiment. The sealing assembly may have a laminate structure that includes two rupture plates (a lower vent member and an upper vent member). A convex terminal cap that covers the rupture plates may be present. Alternatively, the sealing assembly may only include the rupture plates, or have a structure where an internal terminal plate, an insulating plate, and a rupture plate are sequentially stacked from the electrode assembly side. In these case, the bottom plate portion of the housing can does not necessarily include a thin-wall fragile portion.

The lower end portion of the negative electrode is not necessarily coupled to the housing can. A through-hole may be formed in the bottom plate portion of the housing can. The negative electrode may be coupled to the terminal that is inserted in the through-hole. The case where the battery 10 includes the lower current collector plate 18 and the upper current collector plate 19 has been described. However, the cylindrical battery does not necessarily comprise one or both of the first energization member and the second energization member. The case where the positive electrode 11 includes the resin layer 33 has been described. However, the positive electrode 11 does not necessarily comprise the resin layer.

The power storage device in the present disclosure may have the following configurations.

Configuration 1: A power storage device, comprising: an electrode assembly that includes a first electrode and a second electrode, and a separator interposed therebetween; and a housing body that accommodates the electrode assembly, wherein the first electrode includes a first end and a second end in a first direction, current collection related to the first electrode is performed from a side of the first end, and the first electrode includes a thin-wall portion that has a small thickness at an end portion on a side of the second end.

Configuration 2: The power storage device according to Configuration 1, wherein the first electrode includes a strip-shaped first core, and a first mixture layer disposed on the first core, and the second electrode includes a strip-shaped second core, and a second mixture layer disposed on the second core, and the first mixture layer includes a first mixture thin-wall portion that is the thin-wall portion that has a small thickness at the end portion on the side of the second end in the first direction.

Configuration 3: The power storage device according to Configuration 1 or 2, wherein the thin-wall portion extends in a direction that intersects the first direction.

Configuration 4: The power storage device according to Configuration 2, wherein the first electrode includes a non-facing portion that extends outward away from the second mixture layer in the first direction, and the thin-wall portion is formed at the non-facing portion.

Configuration 5: A power storage device, comprising: an electrode assembly that includes: a first electrode that includes a sheet-shaped first core, and a first mixture layer disposed on the first core; a second electrode that includes a sheet-shaped second core, and a second mixture layer disposed on the second core; and a separator interposed therebetween; and a housing body that accommodates the electrode assembly, wherein the first electrode includes a first end and a second end in a first direction, the first electrode is subjected to current collection from a side of the first end in the first direction, and the first core includes a core thin-wall portion that has a small thickness at an end portion on the side of the second end in the first direction.

Configuration 6: The power storage device according to Configuration 5, wherein the core thin-wall portion extends in a direction that intersects the first direction.

Configuration 7: The power storage device according to Configuration 5 or 6, wherein the first core includes a non-facing portion that extends outward away from the second mixture layer in the first direction, and the thin-wall portion is formed at the non-facing portion.

Configuration 8: The power storage device according to Configuration 2, wherein the second mixture layer includes a second mixture thin-wall portion that has a small thickness at the end portion on the side of the second end in the first direction.

Configuration 9: The power storage device according to Configuration 2, wherein the first core includes a core thin-wall portion that has a small thickness at the end portion on the side of the second end in the first direction.

Configuration 10: The power storage device according to any one of Configurations 2, 4, 5, 6, 7, 8, and 9, further comprising a first energization member electrically coupled to the first electrode, wherein in the first electrode, at the end portion on the side of the first end, the first mixture layer extending in a first longitudinal direction of the first electrode is not formed, and a first exposed portion where the first core is exposed is formed, and the first energization member and the first exposed portion are joined to each other.

Configuration 11: The power storage device according to any one of Configurations 2, 4, 5, 6, 7, 8, 9, and 10, wherein in the first electrode, at the end portion on the side of the second end, the first mixture layer extending in a first longitudinal direction of the first electrode is not formed, and the first electrode includes a second exposed portion where the first core is exposed, and at the second exposed portion, a core thin-wall portion that has a small thickness is formed.

Configuration 12: The power storage device according to any one of Configurations 2, 4, 5, 6, 7, 8, 9, 10, and 11, further comprising a second energization member electrically coupled to the second electrode, wherein in the first direction, the second electrode includes a third end disposed on the side of the first end, and a fourth end disposed on the side of the second end, and in the second electrode, at an end portion on a side of the fourth end, the second mixture layer extending in a second longitudinal direction of the second electrode is not formed, and the second electrode includes a third exposed portion where the second core is exposed, and the second energization member and the third exposed portion are joined to each other.

Configuration 13: The power storage device according to Configuration 12, wherein an insulating layer that has an electrically insulating property is formed between the third exposed portion and the second mixture layer.

### REFERENCE SIGNS LIST

10, 110, 210, 310, 410, 510, 610 Cylindrical battery, 11, 211 Positive electrode, 12, 112, 312, 412, 512, 612 Negative electrode, 13 Separator, 14 Electrode assembly, 15 Housing can, 16 Housing can, 17 Sealing assembly, 18 Lower current collector plate, 18a Base portion, 18b Protruding portion, 18c Bottom plate portion, 19 Upper current collector plate, 19a Base portion, 19b Through-hole, 23 Negative electrode, 27 Terminal cap, 27a Base portion, 27b Projection, 28 Gasket, 28a Protruding portion, 30 Second core (positive electrode core), 31 Third exposed portion, 32, 232 Second mixture layer (positive electrode mixture layer), 33 Resin layer, 35 Groove portion, 37 Spacer, 38 Shoulder portion, 40, 340, 440, 540 First core (negative electrode core), 41 First exposed portion, 42, 342, 542 First mixture layer (negative electrode mixture layer), 48 Peripheral edge portion, 55 Lead, 65 Cylindrical portion, 68 Bottom plate portion, 69 Fragile portion, 71 Second mixture thin-wall portion (positive electrode mixture thin-wall portion), 80 Metal plate, 80a Circular-ring-shaped portion, 80b Cylindrical portion, 81, 181, 581 First mixture thin-wall portion (negative electrode mixture thin-wall portion), 82 Insulating plate, 83 Cylindrical portion, 391, 491, 591, 691 First core thin-wall portion (negative electrode core thin-wall portion), 639 Second exposed portion.

## Claims

1. A power storage device, comprising:
an electrode assembly that includes a first electrode and a second electrode, and a separator interposed therebetween; and
a housing body that accommodates the electrode assembly,
wherein the first electrode includes a first end and a second end in a first direction,
current collection related to the first electrode is performed from a side of the first end, and
the first electrode includes a thin-wall portion that has a small thickness at an end portion on a side of the second end.

2. The power storage device according to claim 1, wherein
the first electrode includes a strip-shaped first core, and a first mixture layer disposed on the first core, and the second electrode includes a strip-shaped second core, and a second mixture layer disposed on the second core, and
the first mixture layer includes a first mixture thin-wall portion that is the thin-wall portion that has a small thickness at the end portion on the side of the second end in the first direction.

3. The power storage device according to claim 1, wherein the thin-wall portion extends in a direction that intersects the first direction.

4. The power storage device according to claim 2, wherein
the first electrode includes a non-facing portion that extends outward away from the second mixture layer in the first direction, and
the thin-wall portion is formed at the non-facing portion.

5. A power storage device, comprising:
an electrode assembly that includes: a first electrode that includes a sheet-shaped first core, and a first mixture layer disposed on the first core; a second electrode that includes a sheet-shaped second core, and a second mixture layer disposed on the second core; and a separator interposed therebetween; and
a housing body that accommodates the electrode assembly,
wherein the first electrode includes a first end and a second end in a first direction,
the first electrode is subjected to current collection from a side of the first end in the first direction, and
the first core includes a core thin-wall portion that has a small thickness at an end portion on the side of the second end in the first direction.

6. The power storage device according to claim 5, wherein the core thin-wall portion extends in a direction that intersects the first direction.

7. The power storage device according to claim 5, wherein
the first core includes a non-facing portion that extends outward away from the second mixture layer in the first direction, and
the thin-wall portion is formed at the non-facing portion.

8. The power storage device according to claim 2, wherein
the second mixture layer includes a second mixture thin-wall portion that has a small thickness at the end portion on the side of the second end in the first direction.

9. The power storage device according to claim 2, wherein the first core includes a core thin-wall portion that has a small thickness at the end portion on the side of the second end in the first direction.

10. The power storage device according to any one of claims 2, 4, 5, 6, 7, 8, and 9, further comprising
a first energization member electrically coupled to the first electrode, wherein
in the first electrode, at the end portion on the side of the first end, the first mixture layer extending in a first longitudinal direction of the first electrode is not formed, and a first exposed portion where the first core is exposed is formed, and
the first energization member and the first exposed portion are joined to each other.

11. The power storage device according to any one of claims 2, 4, 5, 6, 7, 8, and 9, wherein
in the first electrode, at the end portion on the side of the second end, the first mixture layer extending in a first longitudinal direction of the first electrode is not formed, and the first electrode includes a second exposed portion where the first core is exposed, and
at the second exposed portion, a core thin-wall portion that has a small thickness is formed.

12. The power storage device according to any one of claims 2, 4, 5, 6, 7, 8, and 9, further comprising
a second energization member electrically coupled to the second electrode, wherein
in the first direction, the second electrode includes a third end disposed on the side of the first end, and a fourth end disposed on the side of the second end, and
in the second electrode, at an end portion on a side of the fourth end, the second mixture layer extending in a second longitudinal direction of the second electrode is not formed, and the second electrode includes a third exposed portion where the second core is exposed, and
the second energization member and the third exposed portion are joined to each other.

13. The power storage device according to claim 12, wherein
an insulating layer that has an electrically insulating property is formed between the third exposed portion and the second mixture layer.
